# EUROPEAN PATENT APPLICATION

(11) **EP 2 261 819 A1**
(43) Date of publication of application: **15.12.2010**
(21) Application number: 09290435.8
(22) Date of filing: 11.06.2009
(51) Int. Cl.: G06F 17/30

(54) **Device for providing a user profile dedicated to specific needs of a requesting service, and associated network equipment**

(71) Applicant: Alcatel Lucent, 75008 Paris (FR)
(72) Inventor: Picault, Jérome, 91620 Nozay (FR); Kostadinov, Dimitre Davidov, 91620 Nozay (FR)
(74) Representative: Hedarchet, Stéphane

(57) **Abstract**

A device (D) is intended for providing on request data defining dedicated profiles of users that are clients of at least one network operator. This device (D) comprises a managing means (MM) arranged, when it receives a request for a dedicated user profile from a service offered by at least one network operator, for determining interest(s) of said user from data representative of a profile of said user and selected as a function of characteristic(s) of said requesting service, and for producing said requested dedicated user profile from said selected user interest(s).

## Description

The present invention relates to the determination of user profiles, and more precisely to user profiles that are adapted to the needs of network services (or applications).

One means here by "user profile" data describing interests (or preferences or else habits) relative to one or more subjects, such as television programs, radio programs, news, music, advertising, entertainment, items to buy or use of services, for instance.

The quantity of information available through communication networks, such as Internet, being always increasing, it becomes more or more difficult for everybody to find interesting information in a reasonable time. To ease the information searches of clients (or users) of the network operators, it has been proposed to use (personalized) services (or applications) exploiting the user profiles. These personalized services may be distributed (or isolated) or, in some environments (e.g. telecommunications), may exploit the same centralized user information. Usually, user profiles are computed in advance because they are supposed to be approximately constant in time. Consequently, if the same user profile is used by two different applications or services, the user's interests will be the same for these applications, regardless of characteristics of these interests with respect to the needs of the applications (for instance one application may use recent interests while another one may use more stable interests).

This basic solution does not take into account the fact that user preferences (or interests) may evolve over time and/or on account of external elements that may affect the interests of users at a given time because of the user context. Indeed, even if users have general stable interests in some topics (or subjects), the relative importance of these interests may change significantly depending on i) external contextual information (for instance a user interest in a given sport may increase significantly during an international competition, or a user interest about social laws or rules may increase during an international economic crisis) and/or ii) a semantic context (i.e. recent content items a user has consumed (such as the ten last books he has read or the ten last movies he has seen)).

This may sometimes result in user dissatisfaction (for instance a news recommender system may recommend articles that are too old or that focus on a topic a user is no more interested with).

Several more sophisticated solutions have been proposed to improve the situation.

A first solution is described in the patent document US 2006/0230012. It proposes to assign a given weight to a presumed user interest described by a concept.

One means here by "concept" something defined from one or several ontologies and therefore associated to a semantic content. It is usually described by a set of at least one property (i.e. a set of descriptors having a type and a value).

A second solution is described in the patent document EP 08290033 and in the article of I. Cantador et al., "A Multi-Purpose Ontology-Based Approach for Personalised Content Filtering and Retrieval", Advances in Semantic Media Adaptation and Personalization, Springer Verlag Studies in Computational Intelligence, Vol. 93, February 2008, pp. 25-52. It introduces the notion of "concept history stack" which is a mechanism to keep track of all concepts of potential interest for a user and to detect if a concept is confirmed as a persistent interest over time and therefore can be considered as a user preference. This second solution assumes that there exists a correlation between the recurrence of a concept in consumed content and the fact that it represents a user preference (or interest). Thus, the history stack record contains all the concepts that are currently in use in the profile as user preferences (or interests) and all concept candidates which may in time become part of the user profile preferences (or interests).

Information about concept ancientness is kept in a kind of memory and used for introducing and removing concepts in the user profile, and to compute a decay parameter, but not for dynamic computation of interest values.

A third solution is described in the document "User profile defined in EU project MESH", accessible at the Internet address "http://www.meship.eu/upload/MESH%20Ontologies.zip". It proposes to define a profile structure in which it is possible to have different views on the user profile based on the notion of user situation (which corresponds to a particular context or a particular user role).

This third solution being only dedicated to contextualization of interests, it is limited to views on user profiles that are based on static information and therefore does not allow more advanced views on user profiles, such as filtering the user profile based on dynamics of interests and/or ancientness of interests.

A fourth solution is described in the document of C. Niederée et al., "A Multi-Dimensional, Unified User Model for Cross-System Personalization", accessible at the Internet address "http://www.informatik.fernunihagen.de/ia/de/staff/hemmje/publications/2004/avi_2004.pdf'. It proposes to use an ontology-based unified user context model (UUCM) which describes the relevant dimensions of the user and his working context(s). This fourth solution encapsulates different profile configurations associated to different context, but it is limited to a profile information filtering based on a single criterion.

A fifth solution is described in the document of S. Abbar, "A Personalized Access Model: Concepts and Services for Content Delivery Platforms", International Conference on Information Integration and Web-based Applications and Services (IIWAS), Linz, Austria, 2008. It proposes to introduce a profile contextualization as a technique for adapting the profile content to the user's environment (generally called context). This fifth solution assumes that the set of contexts in which the user can behave is known. So, the past user behaviour is analyzed to infer a set of mappings between the profile content and the contexts. Thus, when a given application requests a user profile, it only gets relevant user preferences which hold the considered context. So, the profile contextualization enables to adapt the profile content to the user environment but does not consider the application needs. Moreover, user interests associated to a given context are still static.

So the object of this invention is to still improve the situation and more precisely to allow dynamic determination of a part of a user profile which corresponds to interests (or preferences) of this user that are selected as a function of the needs of a service (or application).

For this purpose, the invention provides a device, intended for providing on request data defining profiles of users that are clients of at least one network operator, and comprising a managing means arranged, when it receives a request for a dedicated user profile from a service (or application) offered by at least one network operator, for determining interest(s) (or preference(s)) of this user, from data which are representative of the profile of this user and selected as a function of characteristic(s) of the requesting service (or application), and for producing the requested dedicated user profile from the selected user interest(s).

The device according to the invention may include additional characteristics considered separately or combined, and notably:
- its managing means may comprise a computing means arranged for computing patterns of user interests from raw data stored into first storage means and defining complete user profiles, and for producing a requested dedicated user profile from at least these patterns. A pattern of user interest(s) is a pattern which characterizes the evolution trend of at least one interest with respect to the user behaviour;
   ➢ the computing means may be arranged for computing in advance at least some of the patterns of user interests and for storing these patterns into the first storage means;
   ➢ the managing means may comprise a selection means arranged for selecting raw data and/or user pattern(s), stored into the first storage means and concerning the user and the characteristic(s) of the requesting service, and for providing these selected raw data and/or pattern(s) to the computing means for producing the requested dedicated user profile;
- the service characteristics may be chosen from a group comprising at least context(s), an ancientness of an interest, an evolution of interest(s), an incertitude of an interest, a dynamic of interest(s), and a diversity of interests;
   ➢ the ancientness my be chosen from at least an old interest, a new interest and an interest that appeared less than N days ago, the evolution of interest(s) may be chosen from at least a constant interest, a recurring interest and a temporary interest, and the dynamic of interest(s) may be chosen from at least a stable interest, an increasing interest and a decreasing interest;
- the computing means may be arranged, when a user profile contains primary pairs of data, each comprising an identifier of concept representative of a user interest and a primary value relative to this user interest, for computing secondary pairs of data for chosen user interests and each comprising the identifier of the concept representative of the chosen user interest, and a secondary value representative of a weight assigned to the chosen user interest taking into account the primary values of the primary pairs of data that comprise the identifiers of the concepts representative of the chosen user interests; a group of at least one secondary pair of data defining a pattern. So, the invention does not fix an absolute value for a concept: this value is computed on the fly based on a number of criteria given as input;
- it may comprise a second storage means arranged for storing data which define policies that are each associated to at least one service characteristic and that each describe the way of producing either the requested dedicated user profile from raw data and/or pattern(s) and service characteristic(s) or the user patterns from raw data and service characteristic(s);
   ➢ it may comprise a third storage means arranged for storing computation algorithms that are each intended to be configured and used by the computing means when they are designated by a stored policy for computing either a requested dedicated user profile or secondary pairs;
- the computing means may be arranged for computing either a requested dedicated user profile or a pattern of user interest(s) from raw data and/or pattern(s) stored into the first storage means and from additional data that are representative of behaviour logs of the users.

The invention also provides a network equipment, for at least one communication network, and comprising a device such as the one above introduced.

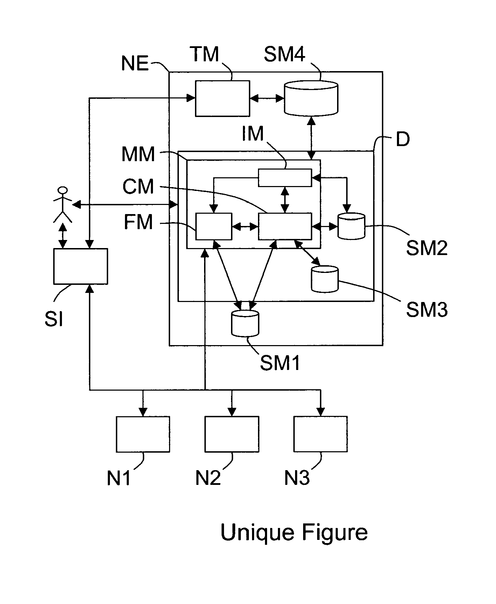

Other features and advantages of the invention will become apparent on examining the detailed specifications hereafter and the appended drawing, wherein the unique figure schematically illustrates a network equipment coupled to three communication networks of different operators and comprising an example of embodiment of a device according to the invention.

The appended drawing may serve not only to complete the invention, but also to contribute to its definition, if need be.

The invention aims at offering a device (D) intended for providing dynamically on request parts of user profiles which correspond to interests (or preferences) of these users that are selected as a function of the needs of a service (or application).

As illustrated in the unique figure, a device D, according to the invention, may be localized into a network equipment NE, for instance a server dedicated to the access to information relative to users that are clients of network operators or a (mobile) multimedia portal. But it could be also coupled to a network equipment or located into, or coupled to, a user communication equipment (possibly of the mobile type).

This device D can be made of a combination of electronic circuit(s) (or hardware modules) and software modules. In this case it further comprises a software interface allowing interworking between the hardware and software modules. But it could be also made of electronic circuit(s) or of software modules (in this last case it can be stored in a memory or in any computer software product, such as a CD-ROM, for instance).

As illustrated, the network equipment NE is coupled (or accessible) to at least one communication network Ni of at least one operator offering services (or applications) using or managing user information, and notably (part of) user profiles. In this example it is connected to three (communication) networks N1 to N3 (i = 1 to 3). So, it is a centralized equipment capable of providing user information for several networks Ni. But it could be connected to (and part of) a single network and therefore only capable of providing user information for this network.

It is important to note that the networks Ni may be wireless networks or wired networks.

As illustrated, the services (or applications) offered by one or several operators, may be accessed by the communication terminals of the users through a service interface SI, which is connected to the networks Ni of these operators.

These services (or applications) may allow users to access to personalized news, personalized TV programs or targeted advertising, possibly on a plurality of their own communication terminals, which may be fixed or mobile phones, fixed or portable computers, personal digital assistants (or PDAs), or set-top boxes, for instance.

Once a request (i.e. an access to a personalized service (or application)) is received by the service interface SI, it is passed to the appropriate service. Each service may have its own personalisation engine, but may need to access centralized user information. Indeed, a telecommunication operator may offer a large set of services on different terminals (or devices), but may want that information collected by one user in relationship with one service also benefits to other services. So, each service has means to send to a centralized network equipment NE (comprising a device D according to the invention) a request for obtaining a dedicated user profile (also called "user profile (access) request"). A user profile (access) request usually contains an identifier of a user and possibly one or more characteristics of the requesting service (or application).

As it is schematically illustrated in the unique figure, a device D according to the invention comprises at least a managing module MM.

This managing module MM is intended for intervening each time its device D receives a request for a dedicated user profile from a service (or application) which is offered by at least one operator of a communication network Ni connected (or accessible) to the network equipment NE (or to the device D).

One means here by "service characteristic" any property describing a kind of interest a service (or application) wants to use. So it may be a context, the ancientness of an interest (or preference), the evolution of interest(s) (or preference(s)), the incertitude of an interest (or preference), the dynamic of interest(s) (or preference(s)), or the diversity of interests (or preferences), for instance.

One means here by "context" one or several external elements that may affect the interest(s) of a user at a given time. So, it may designate an external contextual information (for instance a user interest in a sport which increases significantly during an international competition, or a user interest about social laws or rules when an international economic crisis or war occurs) or a semantic context (for instance the recent contents a user has consumed).

One means here by "ancientness" a time interval between the time of the first occurrence of a user interest and the present time. So, it may designate an old interest, a new interest or an interest that appeared less than N days (or weeks or months or else years) ago, for instance. It can be specified in high level terms, such as "old" or "recent" (or "new"), or with more precise semantic, such as "interest appeared at least two weeks ago". In case where it is specified with high level terms the specific mapping to a precise one has to be done by the managing module MM.

One means here by "evolution of interest" the way a user interest occurs (or appears). So, it may designate a constant interest, a recurring (or periodic) interest or a temporary interest, for instance.

One means here by "dynamic of interest" the way a user interest evolves (or not) with the time. So, it may designate a stable interest, an increasing (or progressive) interest, a decreasing interest or a shift of interest, for instance. For example, a personalized service that tries to sell products to its customers may be more interested in exploiting increasing interests, which correspond to higher desire of buying.

One means here by "incertitude of an interest" a parameter which indicates how risky interests a service (or application) is willing to consider. Often applications have to decide a trade-off between non-risky recommendations (but that can appear obvious) or more risky ones that can be more interesting for a user if at the end it appears to be correct.

Each time device D receives a request for a dedicated user profile from a service (or application), its managing module MM determines interest(s) of the user (designated into this request) from data which are representative of the complete profile of this user and which are selected as a function of characteristic(s) of the requesting service, and for producing said requested dedicated user profile from the selected user interest(s).

It is important to note that the received request may comprise data defining the application characteristic(s), or the application characteristic(s) may be known by the device D in advance, for instance because they are always the same, or because it (D) has interacted at least once with this application (the application characteristics may be cached until they change).

It is also important to note that a requested dedicated user profile may be produced from at least one pattern of user interest(s) or from raw data defining the complete profile of this user (i.e. any information relative to the user behaviour(s)). These raw data may be stored into a first storage means SM1 which is intended for storing all the user information (and notably the complete user profiles) of the clients of the different operators.

This first storage means SM1 may be of any type known from the man skilled in the art. So, it may be a database or a memory, for instance.

In the non limiting illustrated example, the first storage means SM1 is located into the network equipment NE. But, this is not mandatory. Indeed, it could be located into another network equipment accessible to the device D.

A pattern of user interest(s) is a pattern which characterizes the evolution trend of at least one interest with respect to the user behaviour. So, it may concern one or more interests (or preferences or else habits). It can be computed in advance or in real time by a computing module CM of the managing module MM from raw data that are stored into the first storage means SM1.

At least some of the raw data may be data representative of the user activities (or actions or else "logs"). These data activities may be captured by a behaviour tracker TM into the networks Ni and stored into a (fourth) storage means SM4 in association with time information representative of the time at which they have been detected.

Each complete user profile, stored into the first storage means SM1, may contain primary pairs of data (Cjk, V1jk) each comprising an identifier of concept Cjk, which is representative at least partly of a user interest Ik, and a primary value V1jk relative to this user interest Ik. A primary value V1jk may be computed (directly in indirectly) from the time of occurrence of a user activity (or log) concerning an interest, and/or the number of occurrence of a user activity (or log) concerning an interest, for instance. It is important to note that a user interest Ik may be defined by one or several concepts Cjk.

One means here by "concept" something defined from one or several ontologies and therefore associated to a semantic content. It is usually described by a set of at least one property (i.e. a set of descriptors having a type and a value).

In the non limiting illustrated example, the fourth storage means SM4 and the behaviour tracker TM are located into the network equipment NE. But, this is not mandatory. Indeed, they could be located into another network equipment accessible to the device D.

As illustrated, the managing module MM may comprise a selection module FM which is arranged for selecting raw data and/or user pattern(s), that are stored into the first storage means SM1 and which concern a user and the characteristic(s) of a (requesting) service, and for providing these selected raw data and/or pattern(s) to the computing module CM, in order it could produce a requested dedicated user profile (or a pattern).

Also as illustrated, the managing module MM may comprise a profile manager interface IM which is notably arranged for processing the received requests, for providing the selection module FM with the characteristic(s) of a (requesting) service, and for controlling the transmission to its network equipment NE of a requested dedicated user profile, computed by the computing module CM.

As mentioned above, when a user profile contains primary pairs of data (Cjk, V1jk), the computing module CM may be arranged for computing secondary pairs of data (Cjk, V2jk) for some chosen user interests Ik. Each secondary pairs of data (Cjk, V2jk) comprises the identifier of a concept Cjk, which is representative at least partly of a chosen user interest Ik, and a secondary value V2jk, which is representative of a weight assigned to this chosen user interest Ik by the computing module CM. Each weight V2jk, associated to at least one chosen user interest Ik, is computed by the computing module CM from the primary values V1jk that are contained into the primary pairs of data (Cjk, V1jk) which comprise the identifiers of the concepts Cjk representative of this chosen user interest Ik.

A group of at least one secondary pair of data (Cjk, V2jk) defines a pattern of user interest(s).

For instance, a user A may use two personalized applications or services: App₁ (e.g. for obtaining personalized news) and App₂ (e.g. dedicated to television (TV) programs recommendations), and App₁ may need recent interests of user A while App₂ only takes into account interests of user A that appeared longer ago. In this case, the computing module CM can compute different weighted lists of concepts (or secondary pairs of data (Cjk, V2jk)) describing the interests Ik of user A in the context of one of its personalized applications App₁ or App₂.

For instance, if the profile of user A contains the three primary pairs (C11, V111), (C21, V121), (C32, V132), where V1jk is the time at which the corresponding concept Cjk has appeared in the profile of user A, with V111 < V121 < V132, then the computing module CM will compute (C21, V221) and (C32, V232) for App₁, because it needs recent interests of user A, and (C11, V211) and (C21, V221') for App₂, because it needs interests of user A that appeared longer ago, with V221 > V221' for instance. So, App₁ and App₂ will have two different views on the user profile of A, with possibly different interests and different weights assigned to these interests.

To ease the computing module CM to compute the patterns and the requested dedicated user profiles, the device D may further comprise, as illustrated in the non limiting example, a (second) storage means SM2 which stores data defining policies that are each associated to at least one service characteristic. Each policy is made of data which describe the way of producing either a requested dedicated user profile from raw data and/or pattern(s) and service characteristic(s), or a user pattern from raw data and service characteristic(s).

This second storage means SM2 may be of any type known from the man skilled in the art. So, it may be a database or a memory or else a repository, for instance.

For instance, and as illustrated, the second storage means SM2 is coupled both to the profile manager interface IM and to the computing module CM. So, when the profile manager interface IM receives a request from a requesting service (or application), it accesses to the second storage means SM2 to determine each policy concerning a characteristic of the requesting service, so that this (these) determined policy (policies) be provided to the computing module CM. This offers flexibility and modularity. Indeed, when a new service appears, if it has specific needs with respect to profiling and/or recommendations that have not been already covered, new policies and computation algorithms can be dynamically "plugged" or established.

To still more ease the computing module CM to compute the patterns and the requested dedicated user profiles, the device D may further comprise, as illustrated in the non limiting example, a (third) storage means SM3 which stores computation algorithms. Each computation algorithm is intended to be configured and used by the computing module CM when it is designated by a stored policy for computing either a requested dedicated user profile or secondary pairs.

This third storage means SM3 may be of any type known from the man skilled in the art. So, it may be a database or a memory or else a repository, for instance.

For instance, and as illustrated, the third storage means SM3 is coupled to the computing module CM. So, when the computing module CM has received a stored policy to compute a requested dedicated user profile or pattern(s) (or secondary pair(s)), it accesses to the third storage means SM3 to retrieve each computation algorithm stored in correspondence with a received policy. Then, it configures each retrieved computation algorithm with the corresponding received policy (or policies) (which specifies its own parameters), and uses each configured computation algorithm to compute the requested dedicated user profile or a pattern from raw data and/or pattern(s) stored into the first storage means SM1 (and possibly provided by the selection module SM), and also possibly from additional data that are representative of behaviour logs of the users (at least initially stored into the fourth storage means SM4).

A simple computation algorithm allowing to produce a requested dedicated profile can be based on the relative frequency of apparition of concepts in the raw data that have been selected based on the policy which is applied to compute this dedicated profile. For instance, if the policy is "interest appeared less than one week ago", one may select all the raw data that are less than one week old, then one may count how often the concepts appeared. For instance, if one supposes that concept C1 has appeared four times, concept C2 has appeared six times and concept C3 has appeared two times, then one may compute weights based on the relative frequencies of appearance of these contents (C1-C3): weight(C1) = 4/(4+6+2) = 0.33, weight(C2) = 6/(4+6+2) = 0.5, and weight (C3) = 2/(4+6+2) = 0.17. This allows to generate a dedicated profile defined by the following n-uplet ((C1;0.33), (C2;0.5), (C3;0.17)).

As mentioned before, a pattern of user interest(s) allows to characterize the evolution trend of at least one interest with respect to the user behaviour. So, it may be a periodic interest or a progressive interest, for instance. Each pattern can be modelled by a mathematical function. For instance, a periodic interest can be modelled by a sinusoidal function while a progressive interest can be modelled by a linear function. For instance, an application may request interests that follow a specific evolution pattern (for instance expressed as a function type (e.g. sinusoidal versus linear) with optional specific function parameters). In that case, the managing module MM may apply a filter to compare the specified function with the one obtained from the analysis of this interest over time (this can be done e.g. by means of a regression or any other method known in the art).

As illustrated, a user may access directly to the device D through a graphic user interface (or GUI) of its terminal, for instance for privacy reasons to check which information is owned about him or if he wants to change manually some information in its complete user profile. So, a user can have access to different views of its complete profile depending on the interest characteristic(s) he specifies through the profile manager interface IM.

When the device D has finished to compute a requested dedicated user profile, it transmits it to the requesting service (or application) or to the requesting user terminal, by means of its profile manager interface IM.

The invention can provide significant advantages, notably to recommender services (or applications). Indeed it can be used to better manage recommendations, and notably to introduce some level of diversity by combining older and newer interests (or preferences), or by mixing risky interests (or preferences) (those for which evolution trend is uncertain) and more stable ones. Moreover, the invention does not require any change in existing recommendation algorithms.

The invention is not limited to the embodiments of device and network equipment described above, only as examples, but it encompasses all alternative embodiments which may be considered by one skilled in the art within the scope of the claims hereafter.

## Claims

1. Device (D) for providing on request data defining profiles of users that are clients of at least one network operator, **characterized in that** it comprises a managing means (MM) arranged, when it receives a request for a dedicated user profile from a service offered by at least one network operator, for determining interest(s) of said user from data representative of a profile of said user and selected as a function of characteristic(s) of said requesting service, and for producing said requested dedicated user profile from said selected user interest(s).

2. Device according to claim 1, **characterized in that** said managing means (MM) comprises a computing means (CM) arranged for computing patterns of user interests from raw data stored into first storage means (SM1) and defining complete user profiles, and for producing a requested dedicated user profile from at least said patterns.

3. Device according to claim 2, **characterized in that** said computing means (CM) is arranged for computing in advance at least some of said patterns of user interests and for storing said patterns into said first storage means (SM1).

4. Device according to one of claims 2 and 3, **characterized in that** said managing means (MM) comprises a selection means (FM) arranged for selecting raw data and/or user pattern(s), stored into said first storage means (SM1) and concerning said user and said characteristic(s) of the requesting service, and for providing said selected raw data and/or pattern(s) to said computing means (CM) for producing said requested dedicated user profile.

5. Device according to one of claims 1 to 4, **characterized in that** said service characteristics are chosen from a group comprising at least context(s), an ancientness of an interest, an evolution of interest(s), an incertitude of an interest, a dynamic of interest(s), and a diversity of interests.

6. Device according to claim 5, **characterized in that** said ancientness is chosen from at least an old interest, a new interest and an interest that appeared less than N days ago, said evolution of interest(s) is chosen from at least a constant interest, a recurring interest and a temporary interest, and said dynamic of interest(s) is chosen from at least a stable interest, an increasing interest and a decreasing interest.

7. Device according to one of claims 2 to 6, **characterized in that** said computing means (CM) is arranged, when a user profile contains primary pairs of data each comprising an identifier of concept representative of a user interest and a primary value relative to said user interest, for computing secondary pairs of data for chosen user interests and each comprising the identifier of the concept representative of the chosen user interest, and a secondary value representative of a weight assigned to said chosen user interest taking into account the primary values of primary pairs of data comprising the identifiers of the concepts representative of the chosen user interests, and a group of at least one secondary pair of data defining a pattern.

8. Device according to one of claims 2 to 7, **characterized in that** it comprises a second storage means (SM2) arranged for storing data defining policies each associated to at least one service characteristic and describing the way of producing either said requested dedicated user profile from raw data and/or pattern(s) and service characteristic(s) or said user patterns from raw data and service characteristic(s).

9. Device according to claim 8, **characterized in that** it comprises a third storage means (SM3) arranged for storing computation algorithms each intended to be configured and used by said computing means (CM) when they are designated by a stored policy for computing either a requested dedicated user profile or secondary pairs.

10. Device according to one of claims 2 to 9, **characterized in that** said computing means (CM) is arranged for computing either a requested dedicated user profile or a pattern of user interest(s) from raw data and/or pattern(s) stored into said first storage means (SM1) and from additional data representative of behaviour logs of the users.

11. Network equipment (NE) for at least one communication network (Ni), **characterized in that** it comprises a device (D) according to one of claims 1 to 10.
